# EUROPÄISCHE PATENTANMELDUNG

(11) **EP 1 471 331 A2**
(43) Veröffentlichungstag der Anmeldung: **27.10.2004**
(21) Anmeldenummer: 04008965.8
(22) Anmeldetag: 15.04.2004
(51) Int. Cl.: G01D 5/14, G01D 5/16, G01D 5/245

(54) **Verfahren zur Positionserfassung eines sich bewegenden Elements**

(30) Priorität: 24.04.2003 DE 10318692
(71) Anmelder: SIKO GmbH Dr. Ing. G. Wandres, 79256 Kirchzarten/Buchenbach (DE)
(72) Erfinder: Wandres, Horst, 79256 Buchenbach (DE)
(74) Vertreter: Weiss, Peter, Dr.

(57) **Zusammenfassung**

Bei einem Verfahren zur Positionserfassung eines sich bewegenden Elements (2, 3) mittels einem Sensor (1, 1.1), der eine Magnetisierung (4) an dem Element (2, 3) erfasst, soll bei eingeschalteter Betriebspannung die Position als Zählergebnis von einer alternativen Nord-/Südpol-Magnetisierung (4) durch einen magnetempfindlichen Sensor (1, 1.1) erfasst werden.

## Beschreibung

Die Erfindung betrifft ein Verfahren zur Positionserfassung eines sich bewegenden Elements mittels einem Sensor, der eine Magnetisierung an dem Element erfasst, sowie ein hierfür geeignetes Wege- bzw. Winkelmesssystem.

### Stand der Technik

Weg- bzw. Winkelmesssysteme werden heute in vielen industriellen Anwendungen benötigt. Nur beispielhaft wird auf Drehgeber verwiesen, wie sie beispielsweise in der DE 199 58 440 A1 dargestellt sind. Mit ihnen werden beispielsweise die Umdrehungen von Wellen von Arbeitsmaschinen ermittelt.

Wegmesssysteme beziehen sich vor allem auf lineare Massstäbe, Winkelmesssysteme vor allem auf rotative Massstäbe. Die vorliegende Erfindung bezieht sich auf beide Möglichkeiten.

Bislang mussten solche absoluten Weg- und Winkelmesssysteme mit codierten Massverkörperungen ausgestattet sein, welche die Weg- bzw. Winkelinformation in entsprechend codierter Form tragen, so dass auch bei Positionsveränderungen bei ausgeschalteter Betriebsspannung nach dem Wiedereinschalten der Betriebsspannung der Positionswert ohne die Notwendigkeit einer vorherigen Referenzierung zur Verfügung steht.

Aus der DE 42 29 610 A1 und der EP 0 995 974 A1 sind beispielsweise Drehgeber mit einer Geberwelle bekannt, die eine erste Codierscheibe für Single-turn - Messung und eine zweite Codierscheibe für Multi-turn - Messung dreht. Dabei findet auch eine mit Batterie gepufferte Werterfassung im stromlosen Zustand statt. Die Anzahl von Umdrehungen in stromlosem Zustand wird durch vorzugsweise Reedkontakte, die über Magnete geschaltet werden, gezählt. Der Vorteil dabei ist, dass die Betätigung von Reedkontakten stromlos erfolgt und sie sich über geeignete hochohmige Beschaltung sich hier für batteriebetriebene Umdrehungszählung eignen.

Der Nachteil ist allerdings, das Reedkontakte aufgrund ihrer Baugrösse und benötigten Magnetfeldenergie sich nur für die Auflösung weniger Positionen innerhalb einer Umdrehung eignen. Bei Auflösungen höher als 1°, wie sie zum Beispiel im Maschinen- und Anlagenbau gefordert werden, benötigen solche Systeme immer eine zusätzliche hochauflösende Messwerterfassung innerhalb einer Umdrehung. Die Reedkontakte werden daher bei den bekannten Drehgebersystemen nur als Umdrehungszähler ("Multi-turn") verwendet. Für die absolute Positionserfassung innerhalb einer Umdrehung (Single-turn) wird immer eine zusätzliche Sensorik eingesetzt, die auf zum Beispiel optischen, magnetischem, potentiometrischen Messprinzip od.dgl. basieren kann.

Können nur Teilperioden innerhalb einer Umdrehung (Single-turn) absolut erfasst werden, so wird ein Sensor oder Schaltkontakt nicht nur einer vollen Umdrehung, sondern dann zur Zählung der Teilperioden benötigt.

### Aufgabe

Aufgabe der vorliegenden Erfindung ist es, ein Verfahren und ein hierfür geeignetes Wege- bzw. Winkelmessystem der o.g. Art zu entwickeln, das kostengünstig, sehr genau und mit einer inkrementalen Massverkörperung als Basis eine absolute Positionserfassung ermöglicht.

### Lösung der Aufgabe

Zur Lösung dieser Aufgabe führt, dass bei eingeschalteter Betriebsspannung die Position als Zählergebnis von einer alternierenden Nord-/Südpol-Magnetisierung durch einen magnetempfindlichen Sensor erfasst wird.

Das bedeutet, dass mit einem einzigen Sensor und einer einzigen Massstabverkörperung die Position erfasst wird.

Eine besonders bevorzugte Weiterbildung der Erfindung sieht vor, dass die exakte Erfassung der Position des Elements innerhalb eines Pols der Magnetisierung dadurch erfolgt, dass innerhalb dieses Pols die Feldstärke bzw. Feldrichtung ermittelt wird. Bekannt ist das die Feldstärke innerhalb eines Pols bis zu einem Scheitelpunkt ansteigt und dann wieder abfällt. Die Grösse der ermittelten Feldstärke und ihre ansteigende oder abfallende Richtung kann durch Interpolation eine sehr genaue Angabe über die Position des Massstabes geben.

Ein weiteres bevorzugtes Augenmerk der vorliegenden Erfindung ist darauf gerichtet, dass bei ausgeschalteter Betriebsspannung bei einer Positionsänderung des Elements diese mittels des gleichen oder eines zweiten Sensors ermittelt wird. Hierbei genügt es, wenn nur die Pole in negativer oder positiver Positionsrichtung gezählt und in einem Speicher aufaddiert werden.

Der Vorteil dieses Verfahrens ist, dass ein Zählerchip als integrierter Schaltkreis besonders energiesparend ausgeführt sein kann, da nur das Zählen in positive und negative Verfahrrichtung durchgeführt werden muss und dementsprechend der Chip mit einer sehr geringen Fläche auskommt. Daher kann ein derartiger Chip in ultra-low-power-Technologie ausgeführt werden.

Wird als Sensor hierfür ein hochohmiger, zum Beispiel magnetoresistiver Sensor eingesetzt, der sehr hochohmig ausgelegt werden kann (zum Beispiel > 200 kOhm), so beträgt die Stromaufnahme einschliesslich des Zählerchips nur wenige µA, so dass bei entsprechenden handelsüblichen Batterien, die in kompakte Messwertgeber noch integriert werden können, eine Lebensdauer von über zehn Jahren problemlos erreichbar ist.

Wird dann zu einem späteren Zeitpunkt die Betriebsspannung wieder eingeschaltet, so wird der Zählerstand des Zählerchip vom Mikrokontroller ausgelesen und der Positionswert im Mikrokontroller neu generiert.

Grundsätzlich ist denkbar, auch mit einem low-current- Mikrokontroller die Zählfunktion zu realisieren, allerdings ist dann die Stromaufnahme erheblich höher als bei einem speziellen Zähler- ASIC.

Ein Weg- bzw. Winkelmesssystem zur Durchführung des Verfahren benötigt zum einen eine alternierende Nord-/Südpolmagnetisierung auf dem sich bewegenden und zu erfassenden Element. Als Element kommt vor allem ein linearer oder auch ein rotativer Massstab in Betracht.

Als Sensor für das erfindungsgemässe Verfahren bietet sich vorzugsweise ein magnetoresistiver Sensor an. Dieser Sensor ist dann mit einem Mikrokontroller und mit einer Energiequelle verbunden.

Ferner besitzt der Sensor eine Verbindung mit einem Zählerchip und einer eigenen Energiequelle, insbesondere einer Batterie. Denkbar ist selbstverständlich auch der Betrieb des erfindungsgemässen Weg- bzw. Winkelmesssystems über Solarzellen.

In einem Ausführungsbeispiel der Erfindung ist daran gedacht, die Sensorfunktionen auch zu trennen. Das reine Aufzählen der Pole im ausgeschalteten Betriebszustand kann dabei durch einen hochohmigen Sensor erfolgen, der eine sehr geringe Energieaufnahme hat. Die Feinbestimmung der Position durch Ermittlung von Feldstärke bzw. Feldrichtung erfolgt dann mit einem zweiten Sensor, der niederohmig ausgelegt sein kann, da er nur arbeitet wenn das System unter Betriebsspannung steht.

Ferner ist daran gedacht, die Magnetisierung noch in eine Feinspur und eine Grobspur aufzuteilen, um die Genauigkeit der Positionsbestimmung zu erhöhen. In diesem Fall dürfte es am besten sein, wenn der hochohmige Sensor der Grobspur und der niederohmige Sensor für die Feinbestimmung der Feinspur zugeordnet ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 ein teilweise perspektivisch dargestelltes Schema des Zusammenwirkens von Elementen des erfindungsgemässen Wege- bzw. Winkelmesssystems;
Figur 2 eine perspektivische Ansicht eines weiteren Ausführungsbeispiels eines Wege- bzw. Winkelmesssystems;
Figur 3 eine perspektivische Ansicht eines weiteren Ausführungsbeispiels eines Wege- bzw. Winkelmesssystem;
Figur 4 eine perspektivische Ansicht eines Anbaugerätes mit einem integrierten Wege- bzw. Winkelmesssystems;
Figur 5 eine blockschaltbildliche Darstellung eines weiteren Ausführungsbeispiels eines Wege- bzw. Winkelmesssystem;
Figur 6 eine blockschaltbildliche Darstellung eines weiteren Ausführungsbeispiels eines Wege- bzw. Winkelmesssystems.

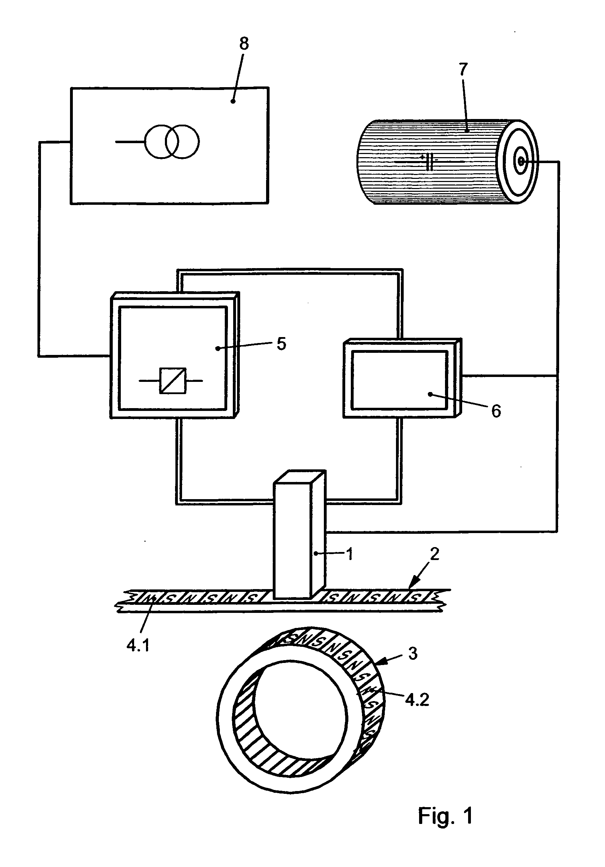

Ein erfindungsgemässes Wege- bzw. Winkelmesssystem weist gemäss Figur 1 einen Sensor 1 auf, der einem linearen Massstab 2 zugeordnet ist. Anstelle eines linearen Massstabs 2 könnte auch ein rotativer Massstab 3 von dem Sensor 1 abgetastet werden.

Wesentlich ist, dass dem linearen Massstab 2 bzw. rotativen Massstab 3 eine alternierende Nord-/Südpol-Magnetisierung 4.1 bzw. 4.2 zugeordnet ist.

Der Sensor 1 ist mit einem Mikrokontroller 5 und mit einem Zählerchip 6 verbunden. Ferner besitzt der Sensor 1 eine Anbindung an eine Batterie 7. Diese Batterie 7 versorgt auch den Zählerchip 6 mit Energie.

Der Zählerchip 6 wiederum ist mit dem Mikrokontroller 5 verbunden. Der Mikrokontroller 5 erhält seine Energie von einer externen Energiequelle 8.

Die Funktionsweise der vorliegenden Erfindung ist folgende:

Bei eingeschalteter Betriebsspannung versorgt die Energiequelle 8 den Mikrokontroller 5 und den Sensor 1 mit entsprechender Energie. Durch den magnetfeldempfindlichen Sensor, der beispielsweise ein Hall-Sensor, vorzugsweise aber ein magnetorsistiver Sensor od.dgl. sein kann, wird die Position des linearen Massstabs 2 oder des rotativen Massstabs 3 als Zählergebnis von den Polen ermittelt. Das heisst, der Sensor 1 zählt die Anzahl der an ihm vorbeigeführten Nord- bzw. Südpole, wobei der Mikrokontroller 5 die Breite der Pole kennt und damit weiss, an welcher Stelle sich der lineare Massstab oder rotative Massstab nach einer gezählten Anzahl von Polen befindet.

Um nun die exakte Position innerhalb eines Pols zu messen, wird durch den Sensor 1 die Feldstärke und/oder die Feldrichtung innerhalb der Position eines Pols erfasst. Die Feldstärke bzw. Feldstärkenrichtung hat einen sinusförmigen Verlauf, wobei sie innerhalb eines Pols erst bis zu einem Scheitelpunkt ansteigt und dann abfällt. Mit der Erfassung der Feldstärke und/oder der Feldrichtung kann sehr exakt die Position des linearen bzw. rotativen Massstabs ermittelt werden.

Wird zum Beispiel ein nach dem magnetoresistiven Messprinzip arbeitender Sensor 1 eingesetzt , so kann durch entsprechende Interpolationsverfahren die Position innerhalb eines Pols absolut erfasst werden. Die Verknüpfung bzw.

Synchronisierung des Zählwertes mit dem Interpolationswert ergibt dann des exakten Positions- oder Winkelwert. Für die Auswertung eignen sich insbesondere Mikrokontroller 5 mit zum Beispiel integriertem Analog-/Digitalwandler zur Ermittlung bzw. Synchronisation von Grob- und Feinposition.

Bei ausgeschalteter Energiequelle 8 wird der Sensor 1 über die Batterie 7 versorgt und ebenfalls der Zählerchip 6. Findet bei ausgeschalteter externer Betriebsspannung eine Positionsverschiebung statt, werden in dem Zählerchip 6 die Anzahl der mit dem Sensor 1 detektierten Pole während der Positionsänderung in positiver bzw. negativer Positionsrichtung aufaddiert.

Wird zu einem späteren Zeitpunkt die Betriebsspannung wieder eingeschaltet, wird der Zählerstand des Zählerchips 6 vom Mikrokontroller 5 ausgelesen und der Positionswert bei Veränderung des Zählerstandes korrigiert. Da die Feinposition, also die Position innerhalb eines Pols, nur bei eingeschalteter Betriebspannung benötigt wird, kann dies dann vom über die Energiequelle 8 mit Betriebsspannung versorgten Mikrokontroller 5 mittels internem oder externen Analog-/Digitalwandler berechnet und mit der Grobposition synchronisiert werden.

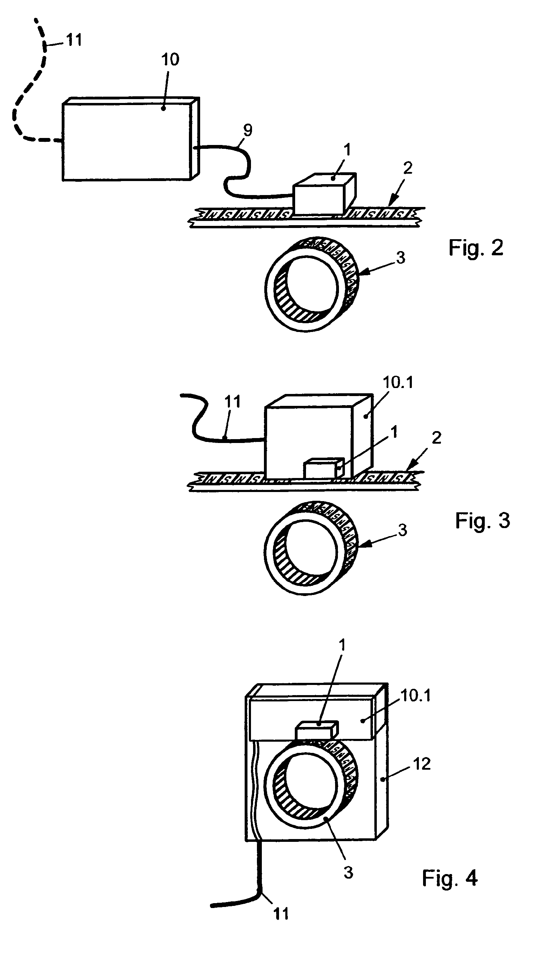

In Figur 2 ist erkennbar, dass der Sensor über eine Leitung 9 mit einer Auswerteeinheit 10 verbunden ist, in der sich der Mikrokontroller 5, der Zählerchip 6 und die Batterie 7 befindet. Einer Anschlussleitung 11 führt zu der nicht näher gezeigten Energiequelle.

Gemäss dem Ausführungsbeispiel nach Figur 3 ist der Sensor 1 in einer Auswerteeinheit 10.1 direkt integriert.

In Figur 4 ist ein Anbaugerät 12 angedeutet, beispielsweise ein inkrementaler Drehgeber, der mit seinem rotativen Massstab 3 auf eine nicht näher gezeigte drehende Welle aufgesetzt wird. In dem Anbaugerät 12 befindet sich die Auswerteeinheit 10.1, in welcher der Sensor 1 integriert ist.

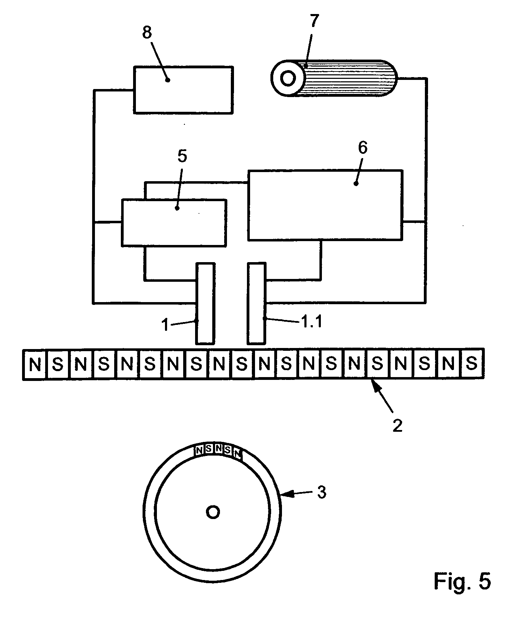

Gemäss Figur 5 ist dem Massstab 2 bzw. 3 neben dem Sensor 1 ein weiterer Sensor 1.1 zugeordnet. Dabei ermittelt der Sensor 1 auch die Feinposition des Massstabs 2, wobei er nur bei eingeschalteter Betriebsspannung, d.h. bei Versorgung aus der Energiequelle 8 arbeitet. Deshalb ist dieser Sensor 1 ein niederohmiger Sensor, der wesentlich genauer arbeitet als ein hochohmiger Sensor. Für den Sensor 1.1 genügt dagegen der Einsatz eines hochohmigen Sensors, da er nur die Grobposition des Massstabes 2 ermitteln muss. Dieser hochohmige Sensor benötigt wiederum nur eine sehr geringe Energie aus der Batterie 7, so dass hierdurch die Lebensdauer der Batterie 7 wesentlich verlängert wird.

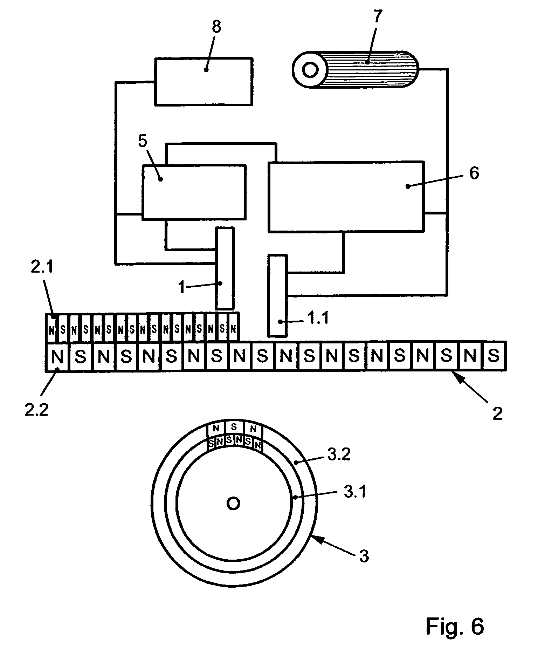

Gemäss dem Ausführungsbeispiel nach Figur 6 ist die Magnetisierung sowohl des linearen Massstabs 2 als auch des rotativen Massstabs 3 in eine Feinspur 2.1 bzw. 3.1 und eine Grobspur 2.2 bzw. 3.2 aufgeteilt. Dabei weist die Feinspur 2.1 bzw. 3.1 innerhalb eines Pols der Grobspur 2.2 bzw. 3.2 sowohl einen Nord- als auch eine Südpolarisierung auf. Durch das Vorsehen dieser Feinspur 2.1 bzw. 3.1 kann die Auflösung und Genauigkeit der Positionsermittlung gegenüber dem Ausführungsbeispiel nach Figur 5 erhöht werden.

Der Sensor 1.1 ist dagegen nur der Grobspur 2.2 bzw. 3.2 zugeordnet, da er nur die Aufgabe hat, die Pole bei einer Positionsveränderung des Massstabs zu zählen.

## Patentansprüche

1. Verfahren zur Positionserfassung eines sich bewegenden Elements (2, 3) mittels einem Sensor (1, 1.1) der eine Magnetisierung (4) an dem Element (2, 3) erfasst,
**dadurch gekennzeichnet,**
**dass** bei eingeschalteter Betriebspannung die Position als Zählergebnis von einer alternierenden Nord-/Südpol-Magnetisierung (4) durch einen magnetempfindlichen Sensor (1, 1.1) erfasst wird.

2. Verfahren nach Anspruch 1, **dadurch gekennzeichnet, dass** zur exakten Erfassung der Position des Elementes (2, 3) innerhalb eines Pols die Feldstärke bzw. Feldrichtung innerhalb dieses Pols ermittelt wird.

3. Verfahren nach Anspruch 1 oder 2, **dadurch gekennzeichnet, dass** bei ausgeschalteter Betriebsspannung bei einer Positionsänderung des Elementes (2 ,3) durch eine zusätzliche Versorgung des Sensors (1, 1.1) mit Energie eine negative bzw. positive Position durch Zählung der Pole ermittelt und in einem Speicher (6) gespeichert wird.

4. Verfahren nach Anspruch 3, **dadurch gekennzeichnet, dass** bei Wiedereinschalten der Betriebsspannung der Zählerstand entsprechend dem Ergebnis der Positionsänderung aus dem Speicher (6) korrigiert wird.

5. Weg- bzw. Winkelmesssystem zur Durchführung des Verfahrens nach wenigstens einem der Ansprüche 1 - 4, **dadurch gekennzeichnet, dass** das Element (2, 3) eine alternierende Nord-/Südpol-Magnetisierung (4) aufweist.

6. Weg- bzw. Winkelmesssystem nach Anspruch 5, **dadurch gekennzeichnet, dass** der Sensor (1, 1.1) ein magnetempfindlicher Sensor, zum Beispiel ein magnetoresistiver Sensor ist.

7. Weg- bzw. Winkelmesssystem nach Anspruch 5 oder 6, **dadurch gekennzeichnet, dass** der Sensor (1, 1.1) mit einem Mikrokontroller (5) und dieser mit einer Energiequelle (7) verbunden ist.

8. Weg- bzw. Winkelmesssystem nach Anspruch 7, **dadurch gekennzeichnet, dass** der Sensor (1, 1.1) mit einem Zählerchip (6) und dieser mit einer eigenen Energiequelle (7) verbunden ist.

9. Weg- bzw. Winkelmesssystem nach Anspruch 8, **dadurch gekennzeichnet, dass** der Zählerchip (6) auch mit dem Mikrokontroller (5) verbunden ist.

10. Weg- bzw. Winkelmesssystem nach Anspruch 8 oder 9, **dadurch gekennzeichnet, dass** der Magnetisierung zwei Sensoren (1, 1.1) zugeordnet sind, wobei einer mit dem Mikrokontroller (5) und der andere mit dem Zählerchip (6) verbunden ist.

11. Weg- bzw. Winkelmesssystem nach Anspruch 10, **dadurch gekennzeichnet, dass** der erste Sensor (1) ein niederohmiger Sensor ist und nur bei eingeschalteter Betriebsspannung (8) arbeitet.

12. Weg- bzw. Winkelmesssystem nach Anspruch 10 oder 11, **dadurch gekennzeichnet, dass** der zweite Sensor (1.1) ein hochohmiger Sensor ist.

13. Weg- bzw. Winkelmesssystem nach wenigstens einem der Ansprüche 10 bis 12, **dadurch gekennzeichnet, dass** die Magnetisierung (4) eine Feinspur (2.1, 3.1) und eine Grobspur (2.2, 3.2) aufweist, wobei jeder Spur ein Sensor (1, 1.1) zugeordnet ist.
